# FASCICULE DE BREVET EUROPEEN

(11) **EP 2 937 062 B1**
(45) Date de publication et mention de la délivrance du brevet: **01.11.2017**
(21) Numéro de dépôt: 15164727.8
(22) Date de dépôt: 22.04.2015
(51) Int. Cl.: A61C 13/30

(54) **STRUCTURE DE RENFORT POUR RECONSTITUTION DENTAIRE CORONO-RADICULAIRE, PROCÉDÉ DE RÉALISATION D'UNE RECONSTITUTION DENTAIRE CORONO-RADICULAIRE, RECONSTITUTION DENTAIRE CORONO-RADICULAIRE**
VERSTÄRKUNGSSTRUKTUR FÜR DEN ZAHNAUFBAU MIT WURZELSTIFT UND STIFTAUFBAU, VERFAHREN ZUR UMSETZUNG EINES SOLCHEN ZAHNAUFBAUS MIT WURZELSTIFT UND STIFTAUFBAU, UND ZAHNAUFBAU MIT WURZELSTIFT UND STIFTAUFBAU
REINFORCING STRUCTURE FOR CROWN-AND-ROOT DENTAL RESTORATION, METHOD FOR PERFORMING CROWN-AND-ROOT DENTAL RESTORATION, AND CROWN-AND-ROOT DENTAL RESTORATION

(30) Priorité: 23.04.2014 FR 1400956
(43) Date de publication de la demande: 28.10.2015
(73) Titulaire: Maneuf, Bernard, 38500 Voiron (FR); Collombin, André, 38500 Voiron (FR); Clunet-Coste, Bruno, 38960 Saint-Etienne-de-Crossey (FR)
(72) Inventeur: Maneuf, Bernard, 38500 Voiron (FR); Collombin, André, 38500 Voiron (FR); Clunet-Coste, Bruno, 38960 Saint-Etienne-de-Crossey (FR)
(74) Mandataire: Talbot, Alexandre

(56) Documents cités:
- WO-A1-99/45859
- FR-A1- 2 730 627
- FR-A2- 2 669 211
- US-A- 5 915 970
- US-A1- 2011 294 095

## Description

### Domaine technique de l'invention

L'invention est relative à une structure de renfort pour reconstitution dentaire corono-radiculaire, à un procédé de réalisation d'une reconstitution corono-radiculaire et à une reconstitution corono-radiculaire.

### État de la technique

En dentisterie, et notamment en endodontie, lors de la réalisation de reconstitution dentaire corono-radiculaire, et en particulier pour reconstruire la partie coronaire d'une dent, la partie radiculaire de la dent est tout d'abord mise en forme par alésage. L'alésage est réalisé grâce à des outils rotatifs ou ultrasoniques cylindro-coniques.

Après mise en forme, un tenon est généralement introduit et scellé, dans le canal radiculaire, pour servir d'ancrage à une reconstitution coronaire. Pour assurer une bonne tenue mécanique, le tenon doit pénétrer jusqu'au tiers apical de la racine.

Les canaux radiculaires sont obturés hermétiquement avec des matériaux spécifiques, comme par exemple des cônes cylindro-coniques en gutta-percha, des pâtes à l'oxyde de zinc/eugénol, ou encore des résines sous forme de préparations bi-composantes.

La partie coronaire de la reconstitution dentaire corono-radiculaire est, ensuite, arrangée autour du tenon radiculaire. Généralement, la partie coronaire de la reconstitution est composée de résine composite.

Il s'agit du schéma traditionnel de "la dent à pivot" : la dent est construite autour du tenon radiculaire principal qui assure sa rétention.

Comme décrit dans le brevet CH-A-562605, les tenons peuvent être en matériau métallique, et sont pourvus chacun d'un filetage destiné à visser la base du tenon dans le canal radiculaire. Ces tenons sont fabriqués par tournage et leur section est toujours circulaire avec un profil en forme de cône ou cylindro-coniques, avec des angles rentrants ou sortants.

Des tenons en matériau composite préfabriqué, éventuellement renforcé par des fibres, sont décrits dans les documents US-A-2011/0294095, US-A-5915970, FR 2588181, US-A-4936776, DE-A-3825601, et EP-A-0432001.

Les tenons présentent une forme finie cylindrique ou cylindro-conique rectiligne et une structure rigide.

Or, le canal est souvent de forme irrégulière, par exemple de section aplatie, ovale ou en forme de huit. Il peut être très évasé dans sa partie coronaire et de section ovalaire. Le canal peut être courbe et mal centré et les racines peuvent être plates ou concaves.

Pour mettre en place le tenon dans le canal radiculaire, le praticien doit donc élargir le canal et en rectifier le trajet. La pose de tenon peut donc être dangereuse. En effet, la préparation du logement du tenon, par alésage mécanique, oblige à des préparations circulaires avec un déplacement du canal du côté de la courbe, un affaiblissement de la paroi canalaire et un risque élevé de fragilisation et de perforation.

De plus, la recherche de contacts maximums entre le tenon et les murs canalaires, tout en essayant de limiter la mutilation dentinaire, obligent le praticien à faire le choix suivant :
- soit, l'utilisation de forets de diamètre élevé avec un risque important de perforation,
- soit l'utilisation d'un foret de diamètre raisonnable ; mais dans ce cas, le tenon ne possédera que des contacts partiels avec les zones non instrumentées, ou souillées de matériel d'obturation, ce qui conduit à un mauvais collage et à une mauvaise transmission des contraintes.

Le document FR-A-2753365 décrit un tenon endo-canalaire. Le tenon est formé d'une âme enrobée de manchons. L'âme en matériau composite est semi-rigide et élastique : elle est composée d'une matrice organique renforcée par fibres. Les manchons sont en matériau composite préimprégné de résine, et se trouve dans un état pâteux d'avant polymérisation.
Avant et pendant son introduction dans le canal radiculaire, l'insert, de section cylindrique, est donc flexible et malléable. Le matériau est ensuite polymérisé à la demande par des moyens de réticulation pour passer dans un deuxième état polymérisé.
Ce type de renfort permet un alésage moins important du canal, réduisant les risques de fragilisation ou de perforation des parois canalaires.
Cependant, l'état d'avant polymérisation de la résine imprégnant le renfort, et l'extrême malléabilité du tenon, rendent très aléatoire son introduction dans un canal dentaire ainsi que la complète photo-polymérisation au niveau de l'apex.

Il a été constaté que la chambre pulpaire d'une molaire inférieure possède dans certains cas une forme de parallélépipède rectangle. La totalité des racines mésiales sont courbes et possèdent une concavité de la paroi distale, et 99 % présentent une concavité de la paroi mésiale. Les prémolaires supérieures possèdent une concavité mésiale et des racines frêles. Le canal est de section ovale ou même en forme de « 8 » dans son premier tiers coronaire. La seule partie rectiligne du canal se trouve en général située au tiers coronaire de la racine, et le canal est évasé avec une section aplatie.
La rectification du canal pour le rendre rectiligne affaiblit la tenue mécanique de l'ancrage.

Le document GB 1255875 décrit un pivot adaptable, au cas par cas, à la morphologie de la racine de la dent. L'ancrage canalaire dentaire anatomique a une section non circulaire, notamment en forme d'ellipse ou de haricot. Cette forme permet d'augmenter les zones de contact entre le tenon dentaire et le canal radiculaire et une meilleure distribution des forces mécaniques.

La partie coronaire d'une reconstitution dentaire corono-radiculaire peut également être renforcée en insérant latéralement au tenon principal des mini-tenons auxiliaires (produit Fibercone® de RTD). Ces tenons correspondent au schéma traditionnel du tenon central de la dent à pivot. Les tenons accessoires ne renforcent pas la totalité de la partie coronaire d'une reconstitution corono-radiculaire.

### Objet de l'invention

L'invention a pour but de remédier aux inconvénients de l'art antérieur et, en particulier, de proposer un renfort structurel pour reconstitution dentaire corono-radiculaire renforçant en continuité à la fois la partie coronaire et la partie radiculaire tout en évitant les risques de fragilisation ou de perforation des parois canalaires.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en coupe, des structures de renfort pour reconstitution dentaire corono-radiculaire selon deux modes de réalisation,
- les figures 3 à 6 représentent, de manière schématique et en coupe, différentes étapes d'un procédé de réalisation d'une reconstitution corono-radiculaire, selon un mode de réalisation,
- les figures 7 et 8 représentent, de manière schématique et en coupe, différentes étapes d'un procédé de réalisation d'une reconstitution corono-radiculaire, selon un autre mode de réalisation,
- la figure 9 représente, de manière schématique, en coupe, deux structures de renfort dans un canal dentaire,
- les figures 10 et 11 représentent, de manière schématique, et en coupe, des structures de renfort dans un canal dentaire selon un autre mode de réalisation de l'invention.

### Description d'un mode de réalisation préférentiel de l'invention

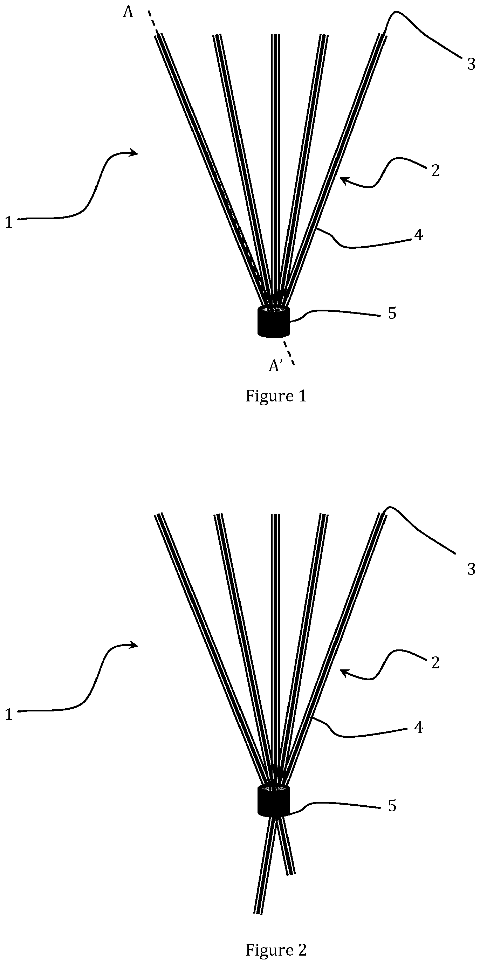

Comme illustré à la figure 1, la structure de renfort 1 pour reconstitution dentaire corono-radiculaire comprend un faisceau de tiges 2.
Par faisceau de tiges, on entend un ensemble d'éléments longilignes liés ensemble dans le sens de la longueur.
Le faisceau comprend au moins deux tiges 2. Préférentiellement, le faisceau comprend de 2 à 10 tiges, et encore, plus préférentiellement, de 3 à 10 tiges et, encore plus préférentiellement, de 3 à 5 tiges.
Le nombre de tiges est, avantageusement, inversement proportionnel au diamètre des tiges.

Les tiges 2 sont, avantageusement, de longueur identique. Elles forment ainsi un faisceau de forme homogène.
Comme représenté sur la figure 2, les tiges 2 peuvent être de longueurs différentes, leurs extrémités étant décalées.

Les tiges 2 sont avantageusement flexibles pour pouvoir s'insérer facilement dans le canal dentaire et s'adapter à la morphologie complexe des canaux dentaires.
Par flexible, on entend un élément souple, qui peut se courber facilement.
Sur la figure 1, les tiges 2 sont droites : elles sont représentées de manière schématique. En réalité, comme elles sont flexibles, elles peuvent présenter une forme courbe.
Les tiges 2 ont un très faible diamètre. Par faible diamètre, on entend un diamètre inférieur ou égal à 0,8mm encore plus préférentiellement il est inférieur ou égal à 0,5mm. Ainsi, selon l'invention, le diamètre des tiges 2 est compris entre 0,1mm et 0,8mm, et, encore plus préférentiellement, il est compris entre 0,1 mm et 0,5mm.
Les tiges 2 peuvent s'adapter ainsi à de nombreuses structures canalaires, même à des structures très exiguës.
Selon un mode de réalisation, les tiges 2 ont un diamètre identique, c'est-à-dire que toutes les tiges ont à peu près le même diamètre à 0,05 mm près.
Selon un autre mode de réalisation, les tiges 2 ont une section croissante depuis le centre du faisceau vers la périphérie du faisceau.
Par exemple, la tige, en position centrale du faisceau, peut avoir un diamètre de 0,8mm et les tiges en position périphérique peuvent avoir un diamètre de 0,3mm.
Selon un autre exemple, le faisceau peut être formé de deux tiges de 0,5 mm de diamètre, de deux tiges de 0,3 mm de diamètre et de deux tiges de 0,15 mm de diamètre.
La totalité de la partie coronaire est, avantageusement, renforcée.

Le diamètre de la tige peut aussi varier tout au long de sa longueur et la tige peut avoir une géométrie cylindro-conique, cylindrique à étage, en double conicité ou encore avec une conicité variable sur toute sa longueur.

Selon un autre mode de réalisation, les tiges 2 peuvent avoir une section décroissante depuis le centre du faisceau vers la périphérie du faisceau.

Les tiges 2 sont en matériau composite : les tiges 2 sont formées d'au moins une fibre 3 enrobée d'une matrice polymère 4.

Avantageusement, la matrice polymère sera choisie par l'homme du métier. Elle doit permettre d'associer solidement les fibres entre elles pour former une tige composite fibrée résistante.

Préférentiellement, chaque tige 2 comporte plusieurs fibres 3 indépendantes les unes des autres ou sous la forme d'un assemblage de fibres, les fibres pouvant être, par exemple, torsadées et éventuellement floquées, recouverte d'un revêtement.
Les fibres sont, de préférence, des fibres longues unidirectionnelles. Les fibres 3 d'une même tige 2 sont enrobées dans une matrice polymère 4.
Chaque tige 2 est formée de fibres 3 enrobées dans une matrice polymère 4. Les tiges 2 sont, de préférence, individuellement, entièrement polymérisées de manière à former des tiges 2 flexibles indépendantes les unes des autres.
Les fibres 3 jouent le rôle de renfort au sein des tiges 2, dans leur grand axe (axe AA' de la figure 1).

Les fibres 3 des tiges 2 peuvent être de nature identique ou différente, au sein d'une même tige 2.
Les fibres 3 peuvent de nature identique ou différente d'une tige 2 à l'autre.
On peut utiliser n'importe quelle sorte de fibre pourvue qu'elle possède un revêtement de surface (ou « coating » en anglais) compatible avec la résine d'assemblage utilisée. Il peut s'agir de fibres manufacturées artificielles, comme des fibres siliceuses, des fibres de carbone, ou encore des fibres organiques (du type poly(p-phénylènetéréphtalamide) (PPD-T), aramide, nylon...) ou même des fibres naturelles.
Comme représenté sur les figures 1 et 2, les tiges 2 sont assemblées, connectées mécaniquement par un élément d'assemblage 5. Toutes les tiges 2 sont maintenues ensemble par l'élément d'assemblage 5. L'élément d'assemblage 5 est configuré pour grouper la pluralité de tiges 2.
L'élément d'assemblage 5 recouvre partiellement la longueur des tiges 2 et est configuré pour tenir mécaniquement les tiges ensemble et pour laisser libre une partie de la longueur des tiges 2. Conformément à l'invention, chaque tige présente une extrémité libre mobile en flexion et en translation par rapport aux autres tiges du faisceau de tiges. Les tiges peuvent aussi glisser librement les unes par rapport aux autres selon leur grand axe, tout en étant freinées par leur frottement réciproque.
Chaque tige présente, avantageusement, une mobilité dans les trois dimensions de l'espace.
Le moyen d'assemblage 5 est disposé de manière à ce qu'au moins la moitié de la longueur des tiges 2 ne soit pas solidarisée par le moyen d'assemblage 5. L'élément d'assemblage 5 est, par exemple, positionné dans le premier tiers de la longueur du faisceau de tiges 2, de manière à permettre, autoriser la flexion et le glissement axial d'une tige par rapport à l'autre.
Préférentiellement, l'élément d'assemblage 5 est disposé à une des extrémités du faisceau de tiges 2, pour entraver, au minimum, la liberté de flexion des tiges 2 relativement les unes par rapport aux autres.
Par extrémité, on entend que l'élément d'assemblage 5 est positionné sur le premier quart de la longueur de la tige.

Les tiges 2 sont maintenues d'un seul côté de manière à former un faisceau évasé. Par faisceau évasé, on entend un faisceau de tiges ayant la forme d'un bouquet, c'est-à-dire que la section du faisceau de tiges 2 au niveau de l'élément d'assemblage est strictement inférieure à la section du faisceau de tiges au niveau de l'extrémité libre, i.e. l'extrémité opposée à l'élément d'assemblage 5.
Cependant les tiges peuvent être assemblées de façon circulaire, ovale ou selon une section plane, en fonction de la forme que lui donnera l'élément d'assemblage 5.
Les tiges peuvent être solidarisées à leur extrémité mais les extrémités peuvent ne pas coïncider, par exemple, dans le cas de tiges 2 de longueurs différentes.

Encore plus préférentiellement, l'élément d'assemblage 5 est positionné sur le bout des tiges, le bord extrême des tiges, c'est-à-dire que les tiges ne dépassent que d'un côté de l'élément d'assemblage 5.

Préférentiellement, l'élément d'assemblage 5 est en résine composite.
La résine est choisie parmi les résines méthacrylate, poly éther éther cétone et époxide.

La résine peut contenir des additifs, sous forme de colorants minéraux ou organiques, ainsi que des particules microniques ou nanométriques destinées à en modifier la consistance ou les performances mécaniques.

Par exemple, les tiges 2 sont maintenues par un manchon en résine composite polymérisée. Par manchon, on entend une pièce cylindrique ouverte au moins en une de ces deux extrémités.
L'élément d'assemblage 5 peut être, simplement, réalisé par un collage des extrémités des tiges avec une colle composite. Cette technique est, préférentiellement, choisie lorsque les extrémités des tiges sont décalées.

On décale les extrémités des tiges, dans l'élément d'assemblage 5, lorsqu'un apex fin, pointu est recherché pour le faisceau de tiges.

L'élément d'assemblage 5 est configuré pour maintenir les tiges 2 ensemble lors de leur manipulation. Il est également configuré de telle sorte qu'il est possible de retirer des tiges 2 une à une ou par petite quantité dans le cas où la structure d'accueil du faisceau de tiges est de dimension inférieure au faisceau de tiges.
Lorsqu'une ou plusieurs tiges sont retirées, l'élément d'assemblage continue à maintenir les fibres restantes. L'énergie pour arracher une tige du faisceau est inférieure à l'énergie nécessaire pour ouvrir, ou casser, l'élément d'assemblage 5.
La taille du faisceau de tiges 2 est adaptable en fonction des besoins.

Dans un mode préférentiel de l'invention, le moyen d'assemblage 5 n'empêche pas les tiges 2 de glisser les unes par rapport aux autres sur au moins un dixième de leur longueur et il les bloque ou les retient au-delà de cette distance. Par exemple, les tiges peuvent glisser les unes par rapport aux autres selon leur grand axe (axe AA' de la figure 1). Les tiges 2 peuvent se croiser au sein de la structure.
Avantageusement, l'élément d'assemblage 5 n'empêche pas les tiges 2, aussi appelées micro-tenons, de se déplacer entre elles dans les trois dimensions.

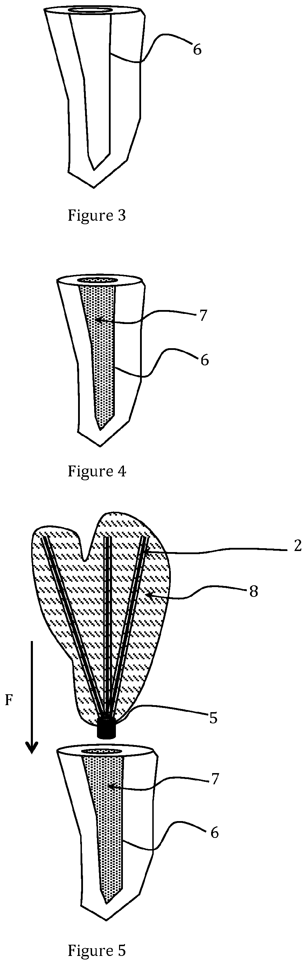

Comme représenté sur les figures 3 à 5, le procédé de réalisation d'une reconstitution dentaire corono-radiculaire 9, sur un modèle de laboratoire, par exemple un moule, comprend les étapes successives suivantes :
1) remplir au moins partiellement un canal dentaire 6 du modèle de laboratoire avec une première résine composite 7,
2) fournir la structure de renfort 1 décrite précédemment, imprégnée avec une deuxième résine composite 8,
3) insérer la structure de renfort 1 dans le canal dentaire 6,
4) polymériser les résines composites 7, 8 de manière à obtenir une reconstitution corono-radiculaire 9.

La figure 3 représente un canal radiculaire 6. Il s'agit d'une cavité. Le procédé peut être réalisé sur tout modèle de laboratoire présentant une cavité.
Lors de l'étape 1), le canal radiculaire 6, ou la cavité, est rempli d'une première résine composite 7 (figure 4). Préférentiellement, il est entièrement rempli de résine.

La structure de renfort 1 est imprégnée d'une deuxième résine composite 8 (étape 2). Préférentiellement, la structure de renfort 1 est imprégnée à saturation, c'est-à-dire qu'au moins les tiges 2 de la structure de renfort 1 sont entièrement recouvertes par la première résine composite 8 (figure 5).

Préférentiellement, la première résine composite 7 et la deuxième résine composite 8 sont identiques, c'est-à-dire qu'elles sont de même nature, il s'agit de la même résine. Encore plus préférentiellement, la première résine composite 7 et la deuxième résine composite 8 sont une seule et même résine de collage. Ceci permet un meilleur maintien mécanique.
Les résines sont polymérisables.
Avantageusement, la même colle composite est utilisée pour la confection de la partie coronaire, de la partie corono-radiculaire ainsi que de la partie apicale de la reconstitution dentaire corono-radiculaire.

Selon un autre mode de réalisation, la deuxième résine composite 8 englobant indépendamment chaque tige 2 peut être différente de la première résine composite 7.

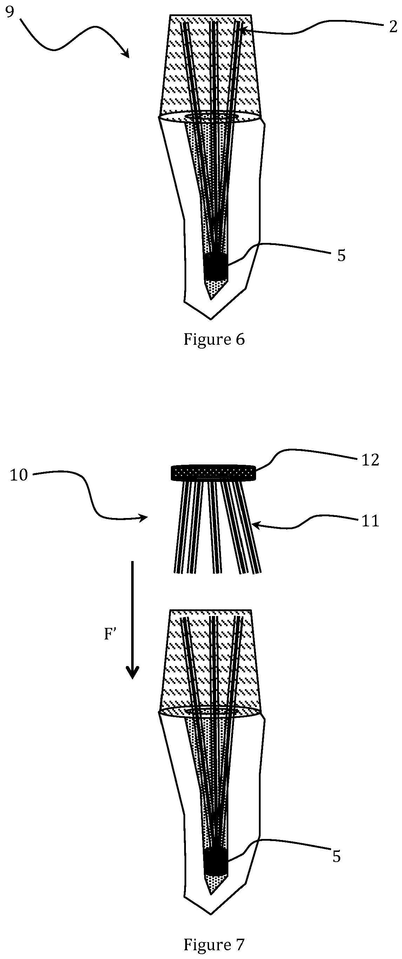

Lors de l'étape 3, la structure de renfort 1, imprégnée de la deuxième résine composite 8, est insérée dans le canal dentaire 6 (flèche F de la figure 5). Préférentiellement, toutes les tiges 2 de la structure de renfort 1 sont maintenues par l'élément d'assemblage 5. L'élément d'assemblage 5 est positionné dans la partie apicale de la structure, de manière à être en contact avec l'alésage opéré avec le foret de préparation (figure 6).
L'élément d'assemblage 5 présente, avantageusement, la même géométrie que l'apex du foret d'alésage utilisé lors de la préparation du canal dentaire 6. L'élément d'assemblage 5 s'adapte ainsi parfaitement dans le canal dentaire 6. Une adaptation précise du tenon permet d'améliorer à la fois la rétention et le collage mais aussi l'écoulement des contraintes fonctionnelles.
L'élément d'assemblage 5 et le faisceau de tiges 2, enrobées de résine, en contact intime avec les parois du canal dentaire, forment un ensemble mécaniquement compact et cohérent, réalisant ainsi une continuité volumique, participant à la répartition des contraintes sans rupture de charge et sans présenter de zones de concentration des contraintes à l'origine des fractures.

Les tiges 2 de la structure de renfort 1 sont dispersées en continuité dans la totalité de la première résine composite 7 de reconstitution. La structure de renfort 1 s'adapte à la géométrie de la cavité par glissement des tiges 2 les unes par rapport aux autres.

Lors de l'étape 4, la première résine composite 7 et la deuxième résine composite 8 sont polymérisées. Après polymérisation, les tiges 2 sont figées dans la reconstitution corono-radiculaire 9.
La polymérisation permet de constituer une reconstitution dentaire corono-radiculaire 9 assurant sa rigidité par sa propre forme et l'architecture de ses renforts.
La partie coronaire est, avantageusement, formée des mêmes tiges 2 que la partie radiculaire.

La reconstitution dentaire corono-radiculaire 9, obtenue selon le procédé, est réalisée sans procéder à de rectification du canal dentaire 6 dans sa partie corono radiculaire, jusqu'au 2/3 de la partie coronaire. Le canal peut être instrumenté avec des alésoirs à conicité variable pour effectuer le traitement endodontique. A l'apex, la conicité est donc définie par cette instrumentalisation.

De plus, elle a la même géométrie que l'apex du foret d'alésage utilisé lors de la préparation du canal dentaire 6 pour le traitement endodontique et s'adapte facilement aux particularités anatomiques des chambres pulpaires et des canaux dentaires.

Avant l'étape de polymérisation, et comme représenté sur les figures 6 à 8, une deuxième structure 10 peut être déposée sur la première structure de renfort 1, les tiges 11 de la deuxième structure de renfort 10 s'enchevêtrant dans les tiges 2 de la première structure de renfort 1 par glissement. La deuxième structure de renfort 10 est insérée en coiffage de la première structure 1 (flèche F' de la figure 7). La deuxième structure de renfort 10 s'adapte sur la première structure 1 par glissement contre les tiges 2 radiculaires pour constituer un réseau fibré pluridimensionnel.

La deuxième structure de renfort 10 est également formée d'un faisceau de tiges 11 en matériau composite : des fibres longues allongées dans le grand axe de chaque tige sont recouvertes d'un polymère entièrement polymérisé. Les tiges 11 sont indépendantes les unes des autres. Les tiges 11 de la deuxième structure de renfort 10 sont maintenues par un élément d'assemblage 12.
Les tiges 11 de la deuxième structure de renfort 10 peuvent également être recouvertes d'une résine composite polymérisable avant d'être insérées en coiffage de la première structure de renfort 1. Préférentiellement, la résine composite est la même que celle recouvrant les tiges 2 de la première structure 1.
Selon un autre mode de réalisation, les tiges 2 de la première structure de renfort 1 présentent une quantité suffisante de résine composite et il n'y a pas besoin de rajouter de la résine sur les tiges 11 de la deuxième structure de renfort 10 (cas de la représentation schématique de la figure 7).

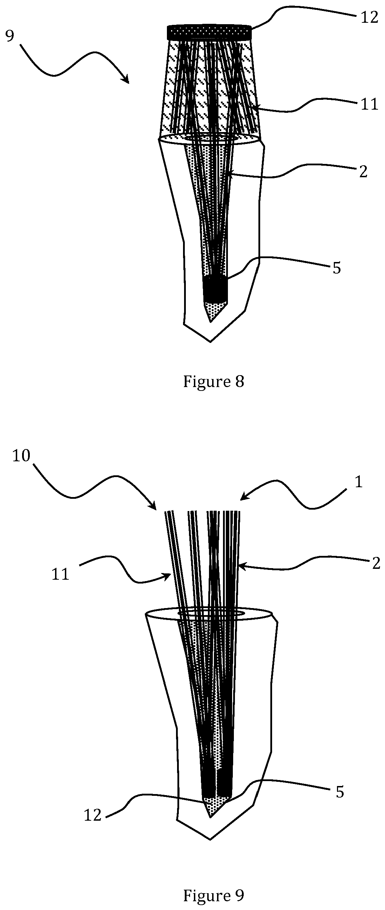

Un réseau de tiges 2, 11 enchevêtrées est obtenu (figure 8). Les contraintes mécaniques sont mieux réparties et la structure est plus solide.

La reconstitution dentaire corono-radiculaire 9 obtenue par le procédé comprend au moins une structure de renfort 1, la structure de renfort 1 étant noyée dans au moins une résine composite polymérisée.

Plus particulièrement, la structure en matériau composite à renfort de fibres pour reconstitution dentaire corono-radiculaire comprend un faisceau de tiges indépendantes les unes des autres. Une portion des tiges est solidarisée par un élément d'assemblage.
La structure de renfort et la résine forment une structure autoportante assurant la rigidité de la reconstitution.

Selon un autre mode de réalisation, la reconstitution dentaire comprend deux structures de renfort 1, 10, disposées l'une au-dessus de l'autre, les tiges 2, 11 des deux structures étant enchevêtrées. La structure de renfort 10 additionnelle, la structure de renfort coronaire, est en complément de la première structure de renfort 1 radiculaire.

Selon un autre mode de réalisation, la reconstitution dentaire peut aussi comprendre des structures de renforts 1, 10 insérées côte à côte dans un même canal dentaire 6 (figure 9). Les deux structures de renfort 1, 10 sont insérées dans un même canal dentaire pour former une même reconstitution dentaire corono-radiculaire. Les éléments d'assemblage 5, 12 de chaque structure de renfort 1, 10 sont disposés côte à côte dans le canal et les tiges 2, 11 des deux structures de renfort s'entremêlent.
Le nombre de tiges et/ou le diamètre des tiges est adapté en fonction de la forme et de la taille de la cavité destinée à recevoir la structure de renfort.
Les tiges 2, 11 de chaque structure sont indépendantes les unes des autres et s'adaptent par flexion à la morphologie naturelle d'un canal dentaire sans alésage à une forme définie.

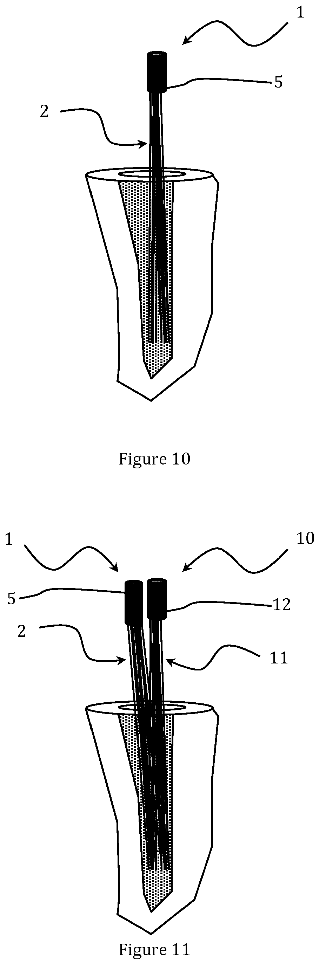

Selon un mode de réalisation préférentiel, l'élément d'assemblage 5 est une gaine thermo-rétractable. Par thermo-rétractable, on entend un élément possédant la propriété de se rétracter sous l'action de la chaleur. Par gaine, on entend un étui, un fourreau pouvant s'adapter à la forme, dimension du faisceau de tiges.
Préférentiellement, et comme représenté sur les figures 10 et 11, lors de l'étape 3) du procédé de réalisation de la reconstitution dentaire corono-radiculaire décrit ci-dessus, les structures de renfort 1, 10, munies de gaine thermo-rétractable, sont insérées dans le canal : les tiges 2, 11 se situent au niveau de la partie radiculaire du canal et l'élément d'assemblage 5, 12 est positionné au-dessus de la partie coronaire. L'élément d'assemblage est en position distale par rapport à la partie apicale du canal dentaire.
L'élément d'assemblage 5 joue, avantageusement, le rôle de préhenseur.

Avant l'étape de polymérisation (étape 4 du procédé décrit ci-dessus), une deuxième structure de renfort 10 peut être déposée à côté de la première structure de renfort 1, dans le canal dentaire 6 (figure 11).

Dans cette configuration (élément d'assemblage disposé à l'opposé de la partie apicale du canal dentaire), l'élément d'assemblage 5, 12 est éliminé à la fin du procédé de réalisation de la reconstitution dentaire corono-radiculaire.

Selon d'autres variantes, ce positionnement des structures de renfort peut également être réalisé avec un faisceau de tiges muni d'un élément d'assemblage d'une autre nature. Il peut s'agir d'une simple gaine, d'un manchon, ou encore de tout élément permettant de maintenir les tiges ensemble, sous la forme d'un faisceau. L'élément d'assemblage peut initier toute forme au faisceau de tiges, aplaties dans le même plan, ovoïde, circulaire, triangulaire. Il n'existe pas de limite aux formes possibles.

Le nombre de structures de renfort 1, 10 insérées dans le canal dentaire dépend de la taille dudit canal. La figure 10 représente, par exemple, un canal dans lequel est inséré une seule structure de renfort. La figure 11 représente un canal dans lequel deux structures de renfort sont insérées côte à côte.
De 1 à 10 structures de renfort peuvent ainsi être insérées dans le canal dentaire.

La reconstitution corono-radiculaire peut être réalisée, par exemple, sur des modèles dentaires de laboratoire.

La reconstitution dentaire corono-radiculaire épouse et respecte les particularités anatomiques et physiologiques du canal radiculaire.
La ou les structures de renfort se prolongent dans tout le volume de la partie radiculaire et de la partie coronaire supra gingivale de la reconstitution dentaire corono-radiculaire. Elles permettent de renforcer en continuité la totalité du matériau de la reconstitution constituant la partie coronaire mais aussi la partie radiculaire.

## Revendications

1. Structure de renfort (1) pour reconstitution dentaire corono-radiculaire comprenant :
- une pluralité de tiges (2) ayant des diamètres allant de 0,1 mm à 0,8mm,
- un élément d'assemblage (5) configuré pour grouper la pluralité de tiges (2) de manière à former un faisceau de tiges, ledit élément d'assemblage (5) recouvrant partiellement la longueur des tiges (2) de manière à ce que chaque tige présente une extrémité libre mobile en flexion et en translation par rapport aux autres tiges du faisceau de tiges.

2. Structure de renfort selon la revendication 1, **caractérisée en ce que** l'élément d'assemblage (5) est disposé à une des extrémités du faisceau de tiges (2).

3. Structure selon l'une des revendications 1 et 2, **caractérisé en ce que** chaque tige (2) est formée de fibres (3) enrobées dans une matrice polymère (4).

4. Structure de renfort selon l'une des revendications 1 à 3, **caractérisée en ce que** l'élément d'assemblage (5) est en résine composite.

5. Structure de renfort selon l'une quelconque des revendications 3 à 4, **caractérisée en ce que** les fibres (3) des tiges (2) sont de nature identique, au sein d'une même tige (2) ou d'une tige (2) à l'autre.

6. Structure de renfort selon l'une quelconque des revendications 3 à 4, **caractérisée en ce que** les fibres (3) des tiges (2) sont de natures différentes, au sein d'une même tige (2) ou d'une tige (2) à l'autre.

7. Structure de renfort selon l'une quelconque des revendications 1 à 6, **caractérisée en ce que** les tiges (2) ont le même diamètre.

8. Structure de renfort selon l'une quelconque des revendications 1 à 6, **caractérisée en ce que** les tiges (2) ont un diamètre croissant depuis le centre du faisceau vers la périphérie du faisceau.

9. Structure de renfort selon l'une quelconque des revendications 1 à 6, **caractérisée en ce que** les tiges (2) ont un diamètre décroissant depuis le centre du faisceau vers la périphérie du faisceau.

10. Structure de renfort selon l'une quelconque des revendications 1 à 9, **caractérisé en ce que** le faisceau de tiges (2) comprend de 3 à 10 tiges.

11. Procédé de réalisation d'une reconstitution dentaire corono-radiculaire, sur un modèle de laboratoire, comprenant les étapes successives suivantes :
- remplir au moins partiellement un canal dentaire (6) du modèle de laboratoire avec une première résine composite (7),
- fournir une structure de renfort (1) imprégnée avec une deuxième résine composite (8), la structure de renfort comprenant
∘ une pluralité de tiges (2) ayant des diamètres allant de 0,1mm à 0,8mm.
∘ un élément d'assemblage (5) configuré pour grouper la pluralité de tiges (2) de manière à former un faisceau de tiges, ledit élément d'assemblage (5) recouvrant partiellement la longueur des tiges (2) de manière à ce que chaque tige présente une extrémité libre mobile en flexion et en translation
par rapport aux autres tiges du faisceau de tiges
- insérer la structure de renfort (1) imprégnée de la deuxième résine composite (8) dans le canal dentaire (6),
- polymériser la première résine composite (7) et la deuxième résine composite (8) de manière à obtenir une reconstitution corono-radiculaire (9).

12. Procédé de réalisation selon la revendication 11, **caractérisé en ce que** la première résine composite (7) et la deuxième résine composite (8) sont identiques

13. Procédé selon l'une des revendications 11 et 12, **caractérisé en ce que**, avant l'étape de polymérisation, une deuxième structure de renfort (10) est déposée sur la première structure de renfort (1), des tiges (11) de la deuxième structure de renfort (10) s'enchevêtrant dans les tiges (2) de la première structure de renfort (1) par glissement.

14. Procédé selon l'une des revendications 11 et 12, **caractérisé en ce que**, avant l'étape de polymérisation, une deuxième structure de renfort (10) est déposée à côté de la première structure de renfort (1), dans le canal dentaire (6).

## Patentansprüche

1. Verstärkungsaufbau (1) zum Zahnstumpfaufbau, der umfasst:
- eine Mehrzahl Stifte (2) mit Durchmessern von 0,1 bis 0,8mm,
- ein Verbindungselement (5), das so vorgesehen ist, dass es die Mehrzahl der Stifte (2) zusammenfasst und so ein Stiftbündel bildet, welches Verbindungselement (5) teilweise die Länge der Stifte (2) bedeckt, sodass jeder Stift ein freies und bezüglich der anderen Stifte des Bündels flexions- und translationsbewegliches Ende aufweist.

2. Verstärkungsaufbau nach Anspruch 1, **dadurch gekennzeichnet, dass** das Verbindungselement (5) an einem der Enden des Bündels aus Stiften (2) angeordnet ist.

3. Aufbau nach einem der Ansprüche 1 und 2, **dadurch gekennzeichnet, dass** jeder Stift (2) aus Fasern (3) besteht, die in eine Polymermatrix (4) gehüllt sind.

4. Verstärkungsaufbau nach einem der Ansprüche 1 bis 3, **dadurch gekennzeichnet, dass** das Verbindungselement (5) aus Verbundharz besteht.

5. Verstärkungsaufbau nach einem der Ansprüche 3 bis 4, **dadurch gekennzeichnet, dass** die Fasern (3) der Stifte (2) in ein und demselben Stift (2) oder von Stift (2) zu Stift von gleicher Beschaffenheit sind.

6. Verstärkungsaufbau nach einem der Ansprüche 3 bis 4, **dadurch gekennzeichnet, dass** die Fasern (3) der Stifte (2) in ein und demselben Stift (2) oder von Stift (2) zu Stift unterschiedlich beschaffen sind.

7. Verstärkungsaufbau nach einem der Ansprüche 1 bis 6, **dadurch gekennzeichnet, dass** die Stifte (2) den gleichen Durchmesser haben.

8. Verstärkungsaufbau nach einem der Ansprüche 1 bis 6, **dadurch gekennzeichnet, dass** die Stifte (2) einen von der Mitte des Bündels zum Umfang des Bündels hin zunehmenden Durchmesser haben.

9. Verstärkungsaufbau nach einem der Ansprüche 1 bis 6, **dadurch gekennzeichnet, dass** die Stifte (2) einen von der Mitte des Bündels zum Umfang des Bündels hin abnehmenden Durchmesser haben.

10. Verstärkungsaufbau nach einem der Ansprüche 1 bis 9, **dadurch gekennzeichnet, dass** das Bündel aus Stiften (2) 3 bis 10 Stifte umfasst.

11. Verfahren zur Durchführung eines Zahnstumpfaufbaus an einem Labormodell, das folgende aufeinander folgende Schritte umfasst:
- zumindest teilweise Auffüllung eines Wurzelkanals (6) des Labormodells mit einem ersten Verbundharz (7),
- Zurverfügungstellung eines mit einem zweiten Verbundharz (8) imprägnierten Verstärkungsaufbaus (1), wobei der Verstärkungsaufbau umfasst:
∘ eine Mehrzahl Stifte (2) mit Durchmessern von 0,1 bis 0,8mm,
∘ ein Verbindungselement (5), das so vorgesehen ist, dass es die Mehrzahl der Stifte (2) zusammenfasst und so ein Stiftbündel bildet, welches Verbindungselement (5) teilweise die Länge der Stifte (2) bedeckt, sodass jeder Stift ein freies und bezüglich der anderen Stifte des Bündels flexions- und translationsbewegliches Ende aufweist.
- Einbringen des mit dem zweiten Verbundharz (8) imprägnierten Verstärkungsaufbaus (1) in den Wurzelkanal (6),
- Polymerisierung des ersten Verbundharzes (7) und des zweiten Verbundharzes (8) in der Weise, dass man einen Zahnstumpfaufbau (9) erhält.

12. Herstellungsverfahren nach Anspruch 11, **dadurch gekennzeichnet, dass** das erste Verbundharz (7) und das zweite Verbundharz (8) identisch sind.

13. Verfahren nach einem der Ansprüche 11 und 12, **dadurch gekennzeichnet, dass** vor dem Polymerisierungsschritt ein zweiter Verstärkungsaufbau (10) auf den ersten Verstärkungsaufbau (1) aufgebracht wird, wobei sich die Stifte (11) des zweiten Verstärkungsaufbaus (10) in den Stiften (2) des ersten Verstärkungsaufbaus (1) durch Gleiten verwirren.

14. Verfahren nach einem der Ansprüche 11 und 12, **dadurch gekennzeichnet, dass** vor dem Polymerisierungsschritt im Zahnkanal (6) ein zweiter Verstärkungsaufbau (10) neben dem ersten Verstärkungsaufbau (1) aufgebracht wird.

## Claims

1. A reinforcement structure (1) for coronal-radicular dental reconstitution comprising:
- a plurality of pins (2) having diameters ranging from 0.1 mm to 0.8mm,
- an assembly part (5) configured to group the plurality of pins (2) so as to form a bundle of pins, said assembly part (5) partially covering the length of the pins (2) so that each pin presents a free end mobile in flexion and in translation with respect to the other pins of the bundle of pins.

2. The reinforcement structure according to claim 1, **characterized in that** the assembly part (5) is arranged at one of the ends of the bundle of pins (2).

3. The reinforcement structure according to one of claims 1 and 2, **characterized in that** each pin (2) is formed by fibers (3) coated in a polymer matrix (4).

4. The reinforcement structure according to one of claims 1 to 3, **characterized in that** the assembly part (5) is made from composite resin.

5. The reinforcement structure according to one of claims 3 and 4, **characterized in that** the fibers (3) of the pins (2) are of identical nature, in any one pin (2) or from one pin (2) to another pin (2).

6. The reinforcement structure according to one of claims 3 and 4, **characterized in that** the fibers (3) of the pins (2) are of different natures, in any one pin (2) or from one pin (2) to another pin (2).

7. The reinforcement structure according to one of claims 1 to 6, **characterized in that** the pins (2) have the same diameter.

8. The reinforcement structure according to one of claims 1 to 6, **characterized in that** the pins (2) have an increasing diameter from the centre of the bundle of pins to the periphery of the bundle of pins.

9. The reinforcement structure according to one of claims 1 to 6, **characterized in that** the pins (2) have a decreasing diameter from the centre of a bundle of pins to the periphery of the bundle of pins.

10. The reinforcement structure according to one of claims 1 to 9, **characterized in that** the bundle of pins (2) comprises from 3 to 10 pins.

11. A method for performing a coronal-radicular dental reconstitution on a laboratory model, comprising the following successive steps:
- at least partially filling a tooth canal (6) of the laboratory model with a first composite resin (7),
- providing the reinforcement structure (1) impregnated with a second composite resin, the reinforcement structure (1) comprising:
∘ a plurality of pins (2) having diameters ranging from 0.1 mm to 0.8mm,
∘ an assembly part (5) configured to group the plurality of pins (2) so as to form a bundle of pins, said assembly part (5) partially covering the length of the pins (2) so that each pin presents a free end mobile in flexion and in translation with respect to the other pins of the bundle of pins
- inserting the reinforcement structure (1) impregnated with the second composite resin (8) in the tooth canal (6),
- polymerizing the first composite resin (7) and the second composite resin (8) so as to obtain a coronal-radicular reconstitution (9).

12. The method according to claim 11, **characterized in that** the first composite resin (7) and the second composite resin (8) are identical.

13. The method according to one of claims 11 and 12, **characterized in that**, before the polymerization step, a second reinforcement structure (10) is deposited on the first reinforcement structure (1), pins (11) of the second reinforcement structure (10) intermeshing with the pins (2) of the first reinforcement structure (1) by sliding.

14. The method according to one of claims 11 and 12, **characterized in that**, before the polymerization step, a second reinforcement structure (10) is deposited next to the first reinforcement structure(1), in the tooth canal (6).
